# EUROPEAN PATENT SPECIFICATION

(11) **EP 0 875 730 B1**
(45) Date of publication and mention of the grant of the patent: **02.07.2003**
(21) Application number: 98107821.5
(22) Date of filing: 29.04.1998
(51) Int. Cl.: G01C 21/20

(54) **Device for and method of displaying map information for vehicle navigation apparatus**
Verfahren und Anordnung zur Informationsdarstellung in Form einer Landkarte für Fahrzeugsnavigationsgeräte
Procédé et dispositif de présentation d'informations cartographiques pour des appareils de navigation de véhicules

(30) Priority: 02.05.1997 JP 11491097
(43) Date of publication of application: 04.11.1998
(73) Proprietor: PIONEER ELECTRONIC CORPORATION, Meguro-ku Tokyo-to (JP)
(72) Inventor: Hijikata, Makoto, Pioneer Electronic Corporation, Kawagoe-shi, Saitama-ken (JP); Yano, Kenichiro, Pioneer Electronic Corporation, Kawagoe-shi, Saitama-ken (JP)
(74) Representative: Klingseisen, Franz, Dipl.-Ing.

(56) References cited:
- EP-A- 0 378 271
- EP-A- 0 660 290
- EP-A- 0 738 876
- EP-A- 0 740 281
- EP-A- 0 744 728
- DE-A- 19 544 921
- "A BIRD'S-EYE MAP DISPLAY FOR CAR NAVIGATION" AUTOMOTIVE ENGINEERING, vol. 104, no. 5, 1 May 1996, pages 59-63, XP000591334
- SPOERRIE A: "NOVEL ROUTE GUIDANCE DISPLAYS" PROCEEDINGS OF THE VEHICLE NAVIGATION AND INFORMATIONS SYSTEMS CONFERENCE, OTTAWA, OCT. 12 - 15, 1993, no. -, 12 October 1993, REEKIE H M, pages 419-422, XP000448520
- PATENT ABSTRACTS OF JAPAN vol. 097, no. 009, 30 September 1997 & JP 09 127861 A (ZANAVY INFORMATICS:KK), 16 May 1997,
- PATENT ABSTRACTS OF JAPAN vol. 097, no. 011, 28 November 1997 & JP 09 179489 A (NISSAN MOTOR CO LTD), 11 July 1997,

## Description

### BACKGROUND OF THE INVENTION

### Field of the Invention:

The present invention relates to the map display technique in a vehicle navigation apparatus which displays the travel route of the vehicle such as an automobile and the names of the facilities, buildings and places around the travel route with map information, thereby assisting the driving of the vehicle.

### Description of the Prior Art:

There are known navigation apparatuses which serve as a position measurement apparatus for various vehicles such as automobiles, airplanes and ships. The navigation apparatus generally displays map information around the current position of the vehicle on a screen of a CRT (Cathode Ray Tube) or an LCD (Liquid Crystal Display) with the position mark indicative of the current position of the vehicle superimposed on the map to guide the driver to the destination.

These navigation apparatuses are roughly grouped into stand-alone type navigation apparatuses and GPS (Global Positioning System) navigation apparatuses. The stand-alone navigation apparatus generally calculates the travel direction and the travel distance of the vehicle using the speed sensor, the angular velocity sensor, the orientation sensor and the like, all installed in the vehicle, and adds the travel direction and the travel distance to the reference position of the vehicle to obtain the current position of the vehicle. Then, the stand-alone type navigation apparatus displays map information on the display screen with the position mark indicating the current position of the vehicle. On the other hand, the GPS navigation apparatus receives the electric waves from plural GPS satellites launched into the space, and calculates the current position of the vehicle from the electric waves thus received according to the two dimensional or three dimensional position measurement method. Then, the GPS navigation apparatus displays map information on the display screen with the mark indicating the current position of the vehicle.

Recently, there is known a hybrid type navigation apparatus which has the functions of both the stand alone type navigation apparatus and the GPS navigation apparatus. The navigation apparatus is generally designed to display map information in association with the current position of the vehicle so that the driver does not lose his way to the destination even if the driver is running through the area unfamiliar to him. Recently, the display area of the map which can be displayed on a single screen is getting broader, and it is getting popular to display the map in a so-called "bird's-eye view" style so as to enable more realistic display of the map. The bird's-eye view display of the map captures the road map obliquely downwardly from a certain view point up in the sky, and displays the map thus captured in a one-point perspective projection diagram. This bird's-eye view display is generally used in the field of the flight simulator.

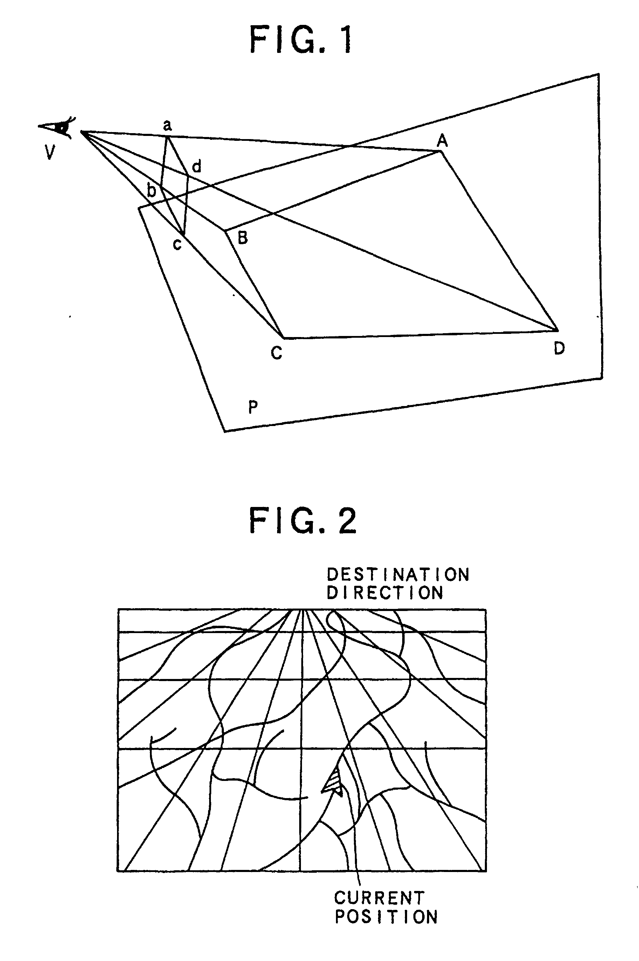

The outline of the bird's-eye view display will be described by referring to FIGS. 1 and 2. In FIG. 1, the plane P represents the map and the rectangle abcd represents the display area of the display device which displays the map. When the view point V is set at the position shown in FIG. 1, the area of the map which can be observed from the view point V through the rectangle abcd is the trapezoid ABCD prescribed on the plane P. Namely, the observable area from the view point V is much broader in the bird's-eye view display than the general planer map display which views the map vertically downwardly from a view point in the sky. The bird's-eye view display shows the map image within the trapezoid ABCD viewed from the view point V on the screen of the display device. FIG. 2 is an example of the bird's-eye view display which shows the road map around the current position of the vehicle to the destination. This view is obtained by placing the view point V in the sky on the side opposite to the destination direction with respect to the current position of the vehicle and viewing the direction of the current position and the destination obliquely downwardly. As a result of placing the view point at such position, the scale of the displayed image continuously changes from the position near the destination to the position near the current vehicle position. The bird's-eye view display shows the area around the current vehicle position in a magnified scale compared with the general planer view of the map and enables the broader display of the route. Namely, the bird's-eye view enables much broader display than the general planer display in a single display image, and also enables more realistic display of the map information which gives the driver the feeling like the actual driving.

As mentioned above, the bird's-eye view enables broader display of map than general planer map display, however, it has such a disadvantage that the actual road shapes and distances are relatively difficult for the driver to recognize. On the contrary, the planer map display enables accurate display of the road shapes and the distances, however, its display are is relatively small.

Additionally, the concept of the bird's-eye view is described in "A bird's-eye map display for car navigation", Automotive Engineering, Vol. 104, No. 5, May 1996, pages 59-63.

Further, EP-A-0 744 728 discloses a map display apparatus for a vehicle which is capable of displaying a bird's eye view of a road map. Here, the bird's eye view is displayed together with a plurality of grid lines and/or a mark at a display position corresponding to the destination so that a driver can easily grasp a sense of distance and constantly be aware of the direction of the destination.

Furthermore, EP-A-0 740 281 discloses a map information displaying device and method for use in a vehicle navigation apparatus the preambles of independent claims 1, 2 and 8, 9, respectively, are based upon. The known device comprises a data converting means for providing a representation of a part of a map in a planimetric representation (depression angle of 90 degrees) and in a bird's-eye representation (acute depression angle), and a display means for displaying the planimetric representation on a first display area of a display plane and the bird's-eye representation on a second display area on the display plane neighboring to the first display area.

### SUMMARY OF THE INVENTION

Accounting for the above mentioned trade-off, it is an object of the present invention to provide map information display device and method of a navigation apparatus which can show accurate road shapes and distances and can also display broader map area in a more comfortable way.

This object is achieved by a map information displaying device according to independent claims 1 and 2 and a map information displaying method according to independent claims 8 and 9, respectively.

According to a first aspect of the present invention, there is provided a map information displaying device for use in a vehicle navigation apparatus, including: a data converting unit for capturing points of map data corresponding to a map from a view point through a viewing line which starts from the view point and has a depression angle with respect to the plane of the map and for perspectively projecting the points of map data onto a viewing plane which is prescribed perpendicularly to the viewing line and has a predetermined distance from the view point to produce map display data, the data converting unit using the depression angle of 90 degrees to produce two dimensional map display data and using the depression angle of an acute angle to produce three dimensional map display data; and a display unit for displaying the two dimensional map display data on a first display area of a display plane and the three dimensional map display data on a second display area of the display plane neighboring to the first display area, wherein the display unit displays the two dimensional map display data and the three dimensional map display data such that the two dimensional map display data and the three dimensional map display data are continuously displayed at the border of the first display area and the second display area.

In accordance with the map information displaying device thus configured, the data converting unit captures points of map data corresponding to a map from a view point through a viewing line which starts from the view point and has a depression angle with respect to the plane of the map and perspectively projects the points of map data onto a viewing plane which is prescribed perpendicularly to the viewing line and has a predetermined distance from the view point to produce map display data. The converting unit uses the depression angle of 90 degrees to produce two dimensional map display data and uses the depression angle of an acute angle to produce three dimensional map display data. Then, the display unit displays the two dimensional map display data on a first display area of a display plane and the three dimensional map display data on a second display area of the display plane neighboring to the first display area, wherein the display unit displays the two dimensional map display data and the three dimensional map display data such that the two dimensional map display data and the three dimensional map display data are continuously displayed at the border of the first display area and the second display area.

As a result, the map information displayed in the first display area is the general planer map and the map information displayed in the second display area is the bird's-eye view map. Therefore, the planer map in the first display area accurately shows the geographical shapes and the distances and, at the same time, the bird's-eye view map in the second display area shows very broad area ahead, wherein the border area of the first and the second display areas are smoothly displayed.

According to a second aspect of the present invention, there is provided a map information displaying device for use in a vehicle navigation apparatus, including: a data converting unit for capturing points of map data corresponding to a map from a view point through a viewing line which starts from the view point and has a depression angle with respect to the plane of the map and for perspectively projecting the points of map data onto a viewing plane which is prescribed perpendicularly to the viewing line and has a predetermined distance from the view point to produce map display data, the data converting unit using the depression angle of 90 degrees to produce two dimensional map display data and using the depression angle of an acute angle to produce three dimensional map display data; and a display unit for displaying the two dimensional map display data on a first display area of a display plane and the three dimensional map display data on a second display area of the display plane neighboring to the first display area, wherein the data converting unit converts the map data such that the scales of the two dimensional map display data and the three dimensional map display data are identical at the border of the first display area and the second display area.

In accordance with the map information displaying device thus configured, the data converting unit captures points of map data corresponding to a map from a view point through a viewing line which starts from the view point and has a depression angle with respect to the plane of the map and perspectively projects the points of map data onto a viewing plane which is prescribed perpendicularly to the viewing line and has a predetermined distance from the view point to produce map display data. The converting unit uses the depression angle of 90 degrees to produce two dimensional map display data and uses the depression angle of an acute angle to produce three dimensional map display data, wherein the data converting unit converts the map data such that the scales of the two dimensional map display data and the three dimensional map display data are identical at the border of the first display area and the second display area. Then, the display unit displays the two dimensional map display data on a first display area of a display plane and the three dimensional map display data on a second display area of the display plane neighboring to the first display area, wherein the display unit displays the two dimensional map display data and the three dimensional map display data such that the two dimensional map display data and the three dimensional map display data are continuously displayed at the border of the first display area and the second display area.

As a result, the map information displayed in the first display area is the general planer map and the map information displayed in the second display area is the bird's-eye view map. Therefore, the planer map in the first display area accurately shows the geographical shapes and the distances and, at the same time, the bird's-eye view map in the second display area shows very broad area ahead, wherein the continuity of the displayed map at the border of the first and second display areas is ensured.

Preferably, the first display area is located at a lower portion of the display plane and the second display area is located at an upper area of the display plane. In addition, the data converting unit may produce the two dimensional map display data from the map data around a current position of a vehicle and produce the three dimensional map display data from the map data of an area in a travelling direction of the vehicle. Therefore, the user can see broad map of the area in the travel direction of the vehicle within the first display area, and see the detailed map around the current vehicle position within the first display area.

In a preferred embodiment, the data converting unit may include a depression angle determination unit for determining a plurality of different acute angles to be used to produce plural sets of three dimensional map display data such that the depression angle for the map data at the position farther in the travel direction has smaller acute angle. In addition, the display unit may display the sets of the three dimensional map display data corresponding to the different acute angles in vertically divided sub-display areas of the second display area. By this, the area in far ahead of the current vehicle position in the travel direction can be displayed.

In a preferred embodiment, the display unit may display grids superimposed on the three dimensional display data within the second display area. Therefore, the distance may be easily recognized in the map shown in the bird's-eye view display.

According to a third aspect of the present invention, there is provided a map information displaying method for use with a vehicle navigation apparatus, including the steps of: capturing points of map data corresponding to a map from a view point through a viewing line which starts from the view point and has a depression angle with respect to the plane of the map, the capturing step using the depression angle of 90 degrees to produce two dimensional map display data and using the depression angle of an acute angle to produce three dimensional map display data; perspectively projecting the points of map data onto a viewing plane which is prescribed perpendicularly to the viewing line and has a predetermined distance from the view point to produce map display data; and displaying the two dimensional map display data on a first display area of a display plane and the three dimensional map display data on a second display area of the display plane neighboring to the first display area, wherein the two dimensional map display data and the three dimensional map display data are displayed such that the two dimensional map display data and the three dimensional map display data are continuously displayed at the border of the first display area and the second display area.

In accordance with the method, points of map data corresponding to a map from a view point through a viewing line which starts from the view point and has a depression angle with respect to the plane of the map are captured. Here, in capturing the points of the map data, the depression angle of 90 degrees is used to produce two dimensional map display data and the depression angle of an acute angle is used to produce three dimensional map display data. Then, the points of map data are perspectively projected onto a viewing plane which is prescribed perpendicularly to the viewing line and has a predetermined distance from the view point to produce map display data. Then, the two dimensional map display data is displayed on a first display area of a display plane and the three dimensional map display data is displayed on a second display area of the display plane neighboring to the first display area, wherein the two dimensional map display data and the three dimensional map display data are displayed such that the two dimensional map display data and the three dimensional map display data are continuously displayed at the border of the first display area and the second display area.

As a result, the map information displayed in the first display area is the general planer map and the map information displayed in the second display area is the bird's-eye view map. Therefore, the planer map in the first display area accurately shows the geographical shapes and the distances and, at the same time, the bird's-eye view map in the second display area shows very broad area ahead, wherein the border area of the first and the second display areas are smoothly displayed.

According to a fourth aspect of the present invention, there is provided a map information displaying method for use with a vehicle navigation apparatus, including the steps of: capturing points of map data corresponding to a map from a view point through a viewing line which starts from the view point and has a depression angle with respect to the plane of the map, the capturing step using the depression angle of 90 degrees to produce two dimensional map display data and using the depression angle of an acute angle to produce three dimensional map display data; perspectively projecting the points of map data onto a viewing plane which is prescribed perpendicularly to the viewing line and has a predetermined distance from the view point to produce map display data; and displaying the two dimensional map display data on a first display area of a display plane and the three dimensional map display data on a second display area of the display plane neighboring to the first display area, wherein the map data are converted such that the scales of the two dimensional map display data and the three dimensional map display data are identical at the border of the first display area and the second display area.

In accordance with the method, points of map data corresponding to a map from a view point through a viewing line which starts from the view point and has a depression angle with respect to the plane of the map are captured. Here, in capturing the points of the map data, the depression angle of 90 degrees is used to produce two dimensional map display data and the depression angle of an acute angle is used to produce three dimensional map display data, wherein the map data are converted such that the scales of the two dimensional map display data and the three dimensional map display data are identical at the border of the first display area and the second display area. Then, the points of map data are perspectively projected onto a viewing plane which is prescribed perpendicularly to the viewing line and has a predetermined distance from the view point to produce map display data. Then, the two dimensional map display data is displayed on a first display area of a display plane and the three dimensional map display data is displayed on a second display area of the display plane neighboring to the first display area.

As a result, the map information displayed in the first display area is the general planer map and the map information displayed in the second display area is the bird's-eye view map. Therefore, the planer map in the first display area accurately shows the geographical shapes and the distances and, at the same time, the bird's-eye view map in the second display area shows very broad area ahead, wherein the continuity of the displayed map at the border of the first and second display areas is ensured.

The invention will be more clearly apparent from the following detailed description with respect to preferred embodiment of the invention when read in conjunction with the accompanying drawings briefly described below.

### BRIEF DESCRIPTION OF THE DRAWINGS

FIG. 1 is a diagram illustrating the general concept of the three dimensional map display;
FIG. 2 is a diagram showing an example of three dimensional map display;
FIG. 3 is a block diagram illustrating the schematic configuration of the navigation apparatus according to the present invention;
FIG. 4 is a flowchart showing the operation of the map display processing;
FIG. 5 is a flowchart showing the detailed operation of the coordinate conversion step shown in FIG. 4;
FIG. 6 is a diagram illustrating the method of two dimensional coordinate conversion;
FIG. 7 is a diagram illustrating the method of three dimensional coordinate conversion;
FIG. 8 is a diagram illustrating the combined use of the two dimensional coordinate conversion and the three dimensional coordinate conversion;
FIG. 9 is a diagram illustrating the method of three dimensional coordinate conversion using plural depression angles; and
FIG. 10 is a diagram showing the map display according to the present invention.

### DETAILED DESCRIPTION OF THE PREFERRED EMBODIMENTS

The preferred embodiment of the present invention will now be described below with reference to the attached drawings. It is noted that the following description is directed to the case in which the present invention is applied to a vehicle navigation apparatus to be installed in an automobile or the like.

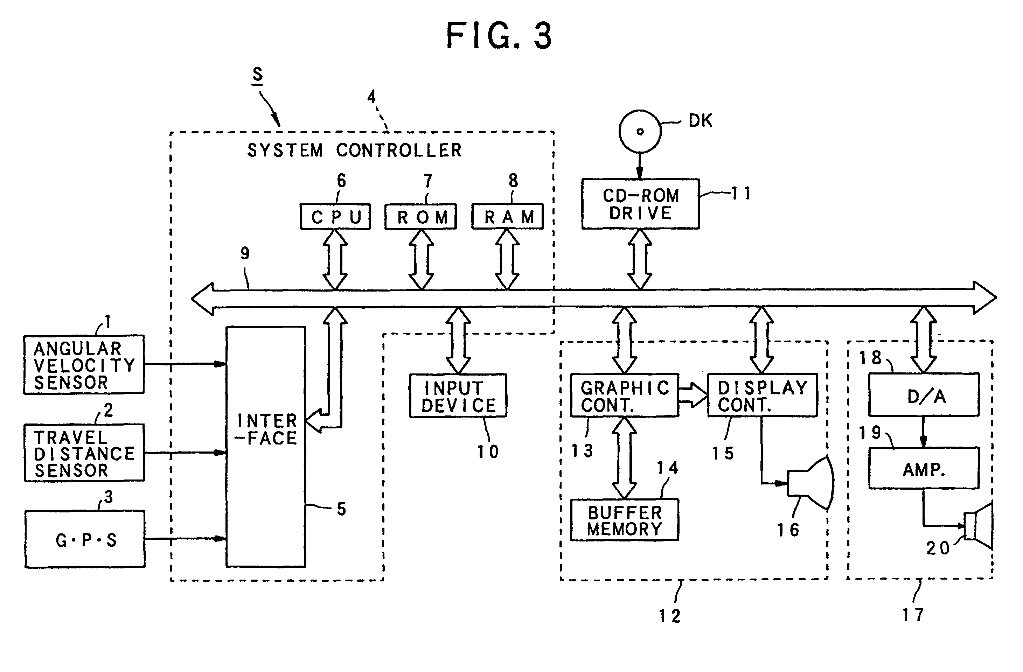

First, the whole configuration of the vehicle navigation apparatus according to the present invention will be described with reference to FIG. 3. As shown in FIG. 3, the navigation apparatus S includes the angular velocity sensor 1, the travel distance sensor 2, the GPS receiver 3, the system controller 4, the input device 10, the CD-ROM drive 11, the display unit 12 and the acoustic playback unit 17. The angular velocity sensor 1 detects the angular velocity of the vehicle at the time of changing the travel direction thereof, and outputs the angular velocity data and the relative orientation data. The travel distance sensor 2 calculates the number of the pulses corresponding to one revolution of the tire of the vehicle by counting the pulse number in the pulse signal, in a predetermined period, outputted according to the revolution of the tire, and outputs the travel distance data based on the number of the pulses corresponding to the one revolution of the tire. The GPS receiver 3 receives the electric waves from GPS satellites to output the GPS measurement data, and also outputs the absolute orientation data indicating the travelling direction of the vehicle itself. The system controller 4 performs total control of the navigation apparatus based on the relative orientation data, the angular velocity data, the travel distance data, the GPS measurement data and the absolute orientation data. The input device 10, such as a remote controller, is used to input various necessary data. The CD-ROM drive 11 reads out, from the CD-ROM disc DK, various data including map data which includes road data indicating number of the lanes of the road and the width of the road, and other data indicating the name and/or detailed information of buildings or the like as well as map information display control program described later in detail. The display unit 12 displays various data under the control of the system controller 4, and the acoustic playback unit 17 reproduces and outputs various sound data under the control of the system controller 4.

The system controller 4 includes the interface unit 5, the CPU 6, the ROM 7 and the RAM 8. The interface unit 5 enables bi-directional communication with the external sensors such as the GPS receiver 3, and the CPU 6 performs total control of the system controller 4. The ROM 7 stores control programs for controlling the system controller 4. The RAM 8 includes a non-volatile memory (not shown) and stores various data including route data inputted by a user via the input unit 10 in a readable manner. The input device 10, the CD-ROM drive 11, the display unit 12 and the acoustic playback unit 17 are connected to the bus line 9.

The display unit 12 includes the graphic controller 13, the buffer memory 14 and the display controller 15. The graphic controller 13 performs total control of the display unit 12 based on the control data supplied from the CPU 6 via the bus line 9. The buffer memory 12 includes a memory such as a VRAM (Video RAM), and temporarily stores video data which can be promptly displayed. The display controller 15 controls the display 16, such as an LCD device or a CRT device, to display the image data supplied by the graphic controller 13.

The acoustic playback unit 17 includes the D/A converter 18, the amplifier 19 and the speaker 20. The D/A converter 18 converts the digital audio data supplied from the CD-ROM drive 11 or the RAM 8 via the bus line 9 into an analog audio signal. The amplifier 19 amplifies the analog audio signal supplied from the D/A converter 18, and the speaker 20 outputs the analog audio signal amplified by the amplifier 19 as a sound.

With the navigation apparatus thus configured, when the user inputs the destination or the like via the input device 10, the map data is read out from the CD-ROM disc DK under the control of the system controller 4 and is displayed on the display unit 12. The navigation device according to the present invention can display the map information in both of two dimensional display and three dimensional display. In the three dimensional display, the geography of a certain area is viewed from an midair view point, and is drawn and displayed in perspective view. The two dimensional display shows the geography of the area in a plane map, viewed from a midair view point vertically downwardly, like an ordinary map. In this connection, the three dimensional display is advantageous in showing broader area than the two dimensional display, but the actual geographical shapes and distances are relatively difficult for the driver to recognize. On the contrary, the two dimensional display is advantageous in showing the actual geographical shapes and the distances, but cannot show broad area. Accounting for this trade-off, the navigation apparatus of the invention is designed to divide the map display area on the display 16 into two areas, i.e., two-dimensional display area and three dimensional display area, to enable simultaneous and combined display of map information in both two dimensional and three dimensional displays. The division of the two dimensional display area and the three dimensional display area is performed in consideration of the advantages of those two different display styles. Specifically, the three dimensional display is used to show the area ahead of the current position of the vehicle so as to enable broader area display, and the two dimensional display is used to show the area near the current position of the vehicle on the displayed map information so as to enable the recognition of actual geographical features around the current position.

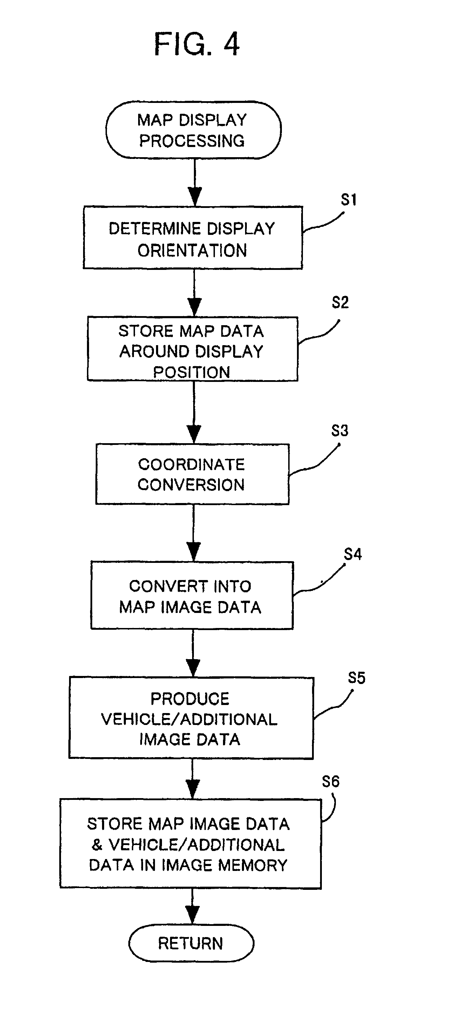

Next, the map display processing according to the present invention will be described. First, the outline of the map display processing will be descried with reference to FIG. 4. The processing described below is carried out by the CPU 6 or the graphic controller 13 as a part of a main navigation program which controls the whole navigation apparatus S for vehicle navigation. Therefore, the map display processing is executed when the instruction is inputted via the input device 10 during the execution of the main navigation program. The control program for achieving the processing is stored in the CD-ROM disc DK, serving as a storage medium, in advance, and read out by the CD-ROM drive 11 according to need.

When the input device 10 receives the instruction of the composite display of the two and three dimensional displays, the main navigation program jumps to the map display processing shown in FIG. 4. First, it is determined whether or not the preset travel route indicating the scheduled travel route from the current position to the destination is prepared and stored in the RAM 8. If the travel route is set, the orientation of the viewing line (hereinafter referred to as "display orientation") in the three dimensional map conversion is calculated to include the preset travel route so that the display 16 can show the travel route to as far position as possible (step S1). Next, based on the display orientation thus calculated and the current position of the vehicle, the CD-ROM drive 11 reads out, from the CD-ROM disc DK, the map data (including name data of the points) including the current position and showing the area around the display position specified by the display orientation, and the map data thus read is temporarily stored in the RAM 8 (step S2).

If the preset travel route does not exist, the travel direction is calculated, as the display orientation, based on the current position and the current travel direction of the vehicle, and the map data around the display position is stored in the similar manner.

After the necessary data is stored in the RAM 8, the road data, the background data and the name data are extracted from the map data thus stored, and the coordinate conversion processing of the basic map data necessary for the composite display is executed (step S3). The name data includes characters of the geographical points, famous facilities and buildings and roads, figures of map marks indicating the schools, police offices and factories, and figures of landmarks indicating the grocery stores, gasoline stands, etc. Specifically, the three dimensional data is produced for the area ahead of the border line, and the two dimensional data is produced for the area behind the border line. Further, three dimensional data for the name data is also produced. The data thus produced are temporarily stored in the RAM 8. The coordinate conversion processing will be described later in greater detail.

Next, the map data stored in the RAM 8 are converted into the map image data corresponding to one screen of the display 16 (step S4). Then, the image data indicating the current position mark of the vehicle calculated by the CPU 6 and the image data corresponding to the additional data such as the distance from the current position to the destination on the preset travel route (hereinafter referred to as "vehicle/additional information image") are produced (step S5). Finally, the map image data and the vehicle/additional information image data are stored in the image memory (step S6), and then process returns to the main navigation program. Thereafter, the map image data and the vehicle/additional information image data are read out from the image memory at the timings controlled by the display controller 15, so that the map is shown on the display 16.

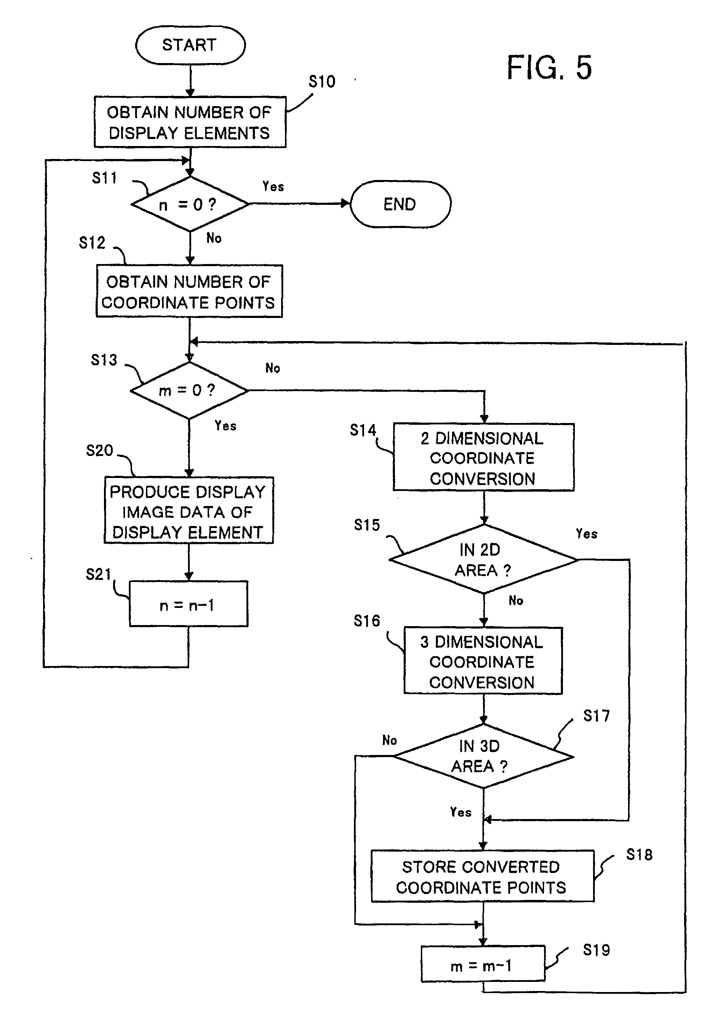

Next, the coordinate conversion processing of the basic map data shown in FIG. 4 as step S3 will be described with reference to FIG. 5. In the flowchart in FIG. 5, first, the number n of the display elements of the road data, background data and the name data is obtained (step S10). The display element is an element of the displayed image such as a road, a building, a facility or a name of them. The following steps are repeated until the number of the display elements becomes zero, namely performed for all display elements. If the number n of the display elements is not zero (step S11; No), the number m of the coordinate points which constitutes one display element is obtained (step S12). Namely, one display element is an aggregation of plural coordinate points. Then, the coordinate conversion to the two dimensional and three dimensional display areas are performed for all coordinates, i.e., until the number m becomes 0. The coordinate conversion will be described below in further detail.

The two dimensional coordinate conversion is carried out for the initial coordinate point (step S14), and then it is determined whether or not the coordinate point after the conversion is within the two dimensional display area (step S15). If Yes, the coordinate point is simply stored in the RAM 8 in step S18. On the contrary, if step S15 results in No, the three dimensional coordinate conversion for the three dimensional map is executed (step S16). Then it is determined whether or not the coordinate point after the three dimensional conversion is within the three dimensional display area (step S17). If Yes, the coordinate point is stored in the RAM 8 in step S18. On the contrary, if step S17 results in No, the coordinate is not used because it locates out of the display area of the current map. Then, process goes to step S19 to decrement the number m by one, and repeats the same steps S14 to S19 for the next coordinate point. When the above processing is done for all coordinate points (step S13; Yes), the display element data for showing the display element is produced (step S20). Next, the display element number n is decremented (step S21), and the process is repeated for all existing display elements (steps S11 to S20).

By the above described processing, the display element data of two and three dimensional displays are produced for the road data, the background data and the name data around the current position of the vehicle. These display element data are converted into the map image data in step S4 of FIG. 3.

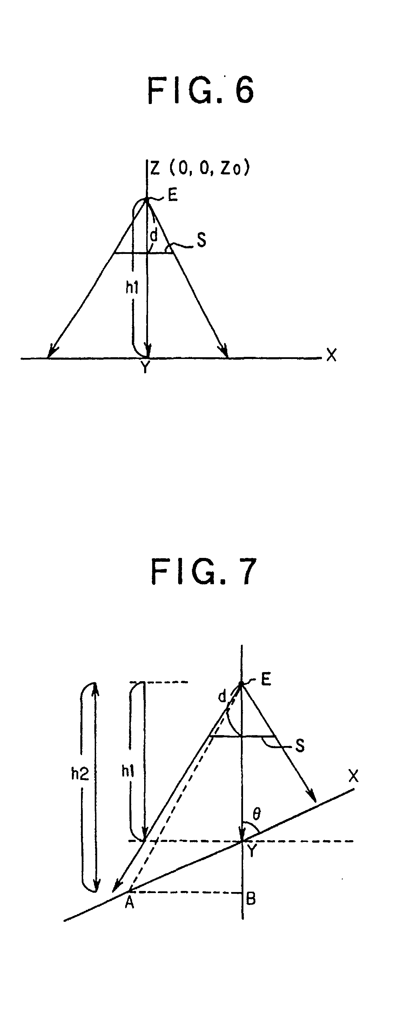

Next, the description will be given of the two dimensional coordinate conversion and the three dimensional coordinate conversion in more detail. First, the two dimensional coordinate conversion will be described with reference to FIG. 6. In the two dimensional coordinate conversion, the two dimensional map is expressed on the XY plane of the XYZ coordinate system shown in FIG. 6. FIG. 6 shows the viewing line to the XY plane from a certain view point E on the Z axis. The map area on the XY plane is converted into the two dimensional coordinates by perspectively projecting the image viewed from the view point E above the XY plane in the direction vertically downwardly with respect to the XY plane to the viewing plane S positioned perpendicularly to the viewing direction. In the example shown in FIG. 6, in order to simplify the description, the view point E (0, 0, Z₀) is provided on the Z axis, and the image obtained by viewing the map area from the view point E vertically downwardly in the Z axis direction is projected onto the viewing plane S positioned perpendicularly to the Z axis. As shown in FIG. 6, the distance between the view point E and the viewing plane S is d, and the height of the view point E from the XY plane is h1. Here, these values are known by the initial setting or the setting made by the user, the two dimensional coordinate conversion, i.e., the conversion of a certain coordinate point on the XY plane to the coordinate point on the viewing plane S is achieved by calculating the ratio of the distance d and the height h1.

Next, the three dimensional coordinate conversion will be described with reference FIG. 7. FIG. 7 shows a viewing line to the XY plane vertically downwardly from a certain point on the Z axis, like FIG. 6. However, FIG. 7 is different from FIG. 6 in that the XY plane is provided obliquely, with the depression angle θ with respect to the viewing line from the view point E. In the three dimensional coordinate conversion, the three dimensional map is expressed on the XY plane shown in FIG. 7. However, in the three dimensional coordinate conversion, the image viewed, not vertically (i.e., with the depression angle of 90 degrees) with respect to the map area, but from the direction of the viewing line which has the depression angle θ with respect to the map area on the XY plane is projected on the viewing plane S positioned perpendicularly to the direction of the viewing line. Assuming that the view point E in the three dimensional coordinate conversion is fixed at the position identical to that in the two dimensional coordinate conversion, this projection manner is equivalent to the projection of the map area on the oblique XY plane, with the angle θ, with respect to the viewing direction from the viewing point E onto the viewing plane S. Now, taking the point A as an example, since the height h2 of the view point E from the point A in the direction of the viewing line is known, the three dimensional coordinate conversion of the point A, which is an arbitrary point on the XY plane, to the viewing plane S is achieved by calculating the ratio of the distance d and the height h2, in the similar manner as the above mentioned two dimensional coordinate conversion. The height h2 is calculated in the following manner. First, the length component YB is obtained using the distance YA from the intersection Y of the viewing line from the view point E with the XY plane and the angle θ. Then, the length component YB is added to the height h1 to obtain the height h2. Then, the projection of the point A to the viewing plane S is achieved by calculating the ratio of the distance d and the height h2 (= h1 + YB).

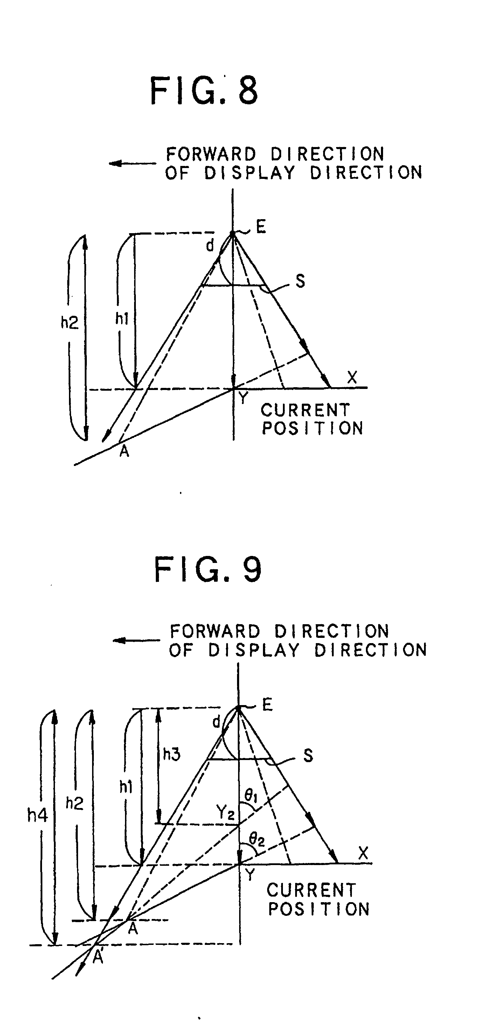

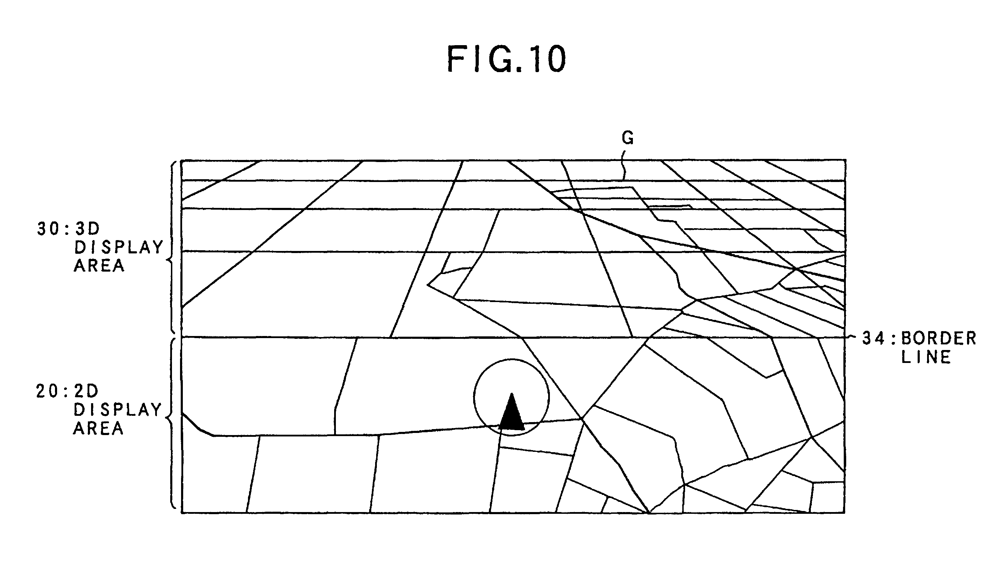

The two dimensional and three dimensional coordinate conversions are performed in the manner described above. In this embodiment, the three dimensional coordinate conversion is applied for the forward portion in the display direction (e.g., travel direction of the vehicle) to enable broader display near the destination, and two dimensional coordinate conversion is applied to the area around the current position of the vehicle to illustrate the geometrical shapes and distances as accurately as possible. The Y axis in FIG. 6 serves as the border line (corresponding to 34 in FIG. 10) of the two dimensional display area and the three dimensional display area, and the scale of the displayed map is kept equal in both forward and rearward sides of the border line so as to preserve the continuity of the displayed map around the border line. FIG. 8 shows the manner of producing the composite display described above in which the forward portion of the display area in the vehicle travel direction is displayed in the three dimensional display while the portion of the display area around the current vehicle position is displayed in the two dimensional display. By this, the user can accurately recognize the road shapes and the distances around the vehicle current position by the two dimensional display, and can grasp the travel route to the destination in the forward portion of the vehicle travel direction by the broadly displayed three dimensional display. In addition, the grids G are displayed in the three dimensional display area so that the distance on the three dimensional display becomes easier to recognize.

The depression angle θ in the three dimensional display area may be a fixed value or varied among plural preset values. For example, the three dimensional coordinate conversion is carried out in the example of FIG. 9 using the different depression angles θ₁, θ₂ (θ₁, < θ₂). In the example of the point A', first the intersection of the line Y₂ and the viewing line is determined to obtain the height h3. Then, the height h4 is obtained from the line Y₂A', the depression angle θ₁ and the height h3. In this way, the three dimensional coordinate conversion can be achieved by using the ratio of the distance d and the heights h3, h4. By using plural different depression angles, the area far ahead of the vehicle position may be broadly displayed. Further, the three dimensional coordinate conversion may be carried out using n different depression angles θ <.. <θₙ < 90°.

## Claims

1. A map information displaying device (4, 12) for use in a vehicle navigation apparatus, comprising:
a data converting means (6) for capturing points (A) of map data corresponding to a map from a view point (E) through a viewing line (EY) which starts from the view point and has a depression angle (θ) with respect to the plane (XY) of the map and for perspectively projecting the points of map data onto a viewing plane (S) which is prescribed perpendicularly to the viewing line and has a predetermined distance (d) from the view point to produce map display data, said data converting means using the depression angle of 90 degrees to produce two dimensional map display data and using the depression angle of an acute angle to produce three dimensional map display data; and
a display means (12) for displaying the two dimensional map display data on a first display area (32) of a display plane and the three dimensional map display data on a second display area (30) of the display plane neighboring to the first display area,
**characterized in that**
said display means displays the two dimensional map display data and the three dimensional map display data such that the two dimensional map display data and the three dimensional map display data are continuously displayed at the border (34) of the first display area and the second display area.

2. A map information displaying device (4, 12) for use in a vehicle navigation apparatus, comprising:
a data converting means (6) for capturing points (A) of map data corresponding to a map from a view point (E) through a viewing line (EY) which starts from the view point and has a depression angle (θ) with respect to the plane (XY) of the map and for perspectively projecting the points of map data onto a viewing plane (S) which is prescribed perpendicularly to the viewing line and has a predetermined distance (d) from the view point to produce map display data, said data converting means using the depression angle of 90 degrees to produce two dimensional map display data and using the depression angle of an acute angle to produce three dimensional map display data; and
a display means (12) for displaying the two dimensional map display data on a first display area (32) of a display plane and the three dimensional map display data on a second display area (30) of the display plane neighboring to the first display area,
**characterized in that**
said data converting means converts the map data such that the scales of the two dimensional map display data and the three dimensional map display data are identical at the border (34) of the first display area and the second display area.

3. A device according to claim 1 or 2, wherein said first display area (32) is located at a lower portion of the display plane and said second display area (30) is located at an upper area of the display plane.

4. A device according to any one of claims 1 to 3, wherein said data converting means produces the two dimensional map display data from the map data around a current position (36) of a vehicle which installs the map information displaying device, and produces the three dimensional map display data from the map data of an area in a travelling direction of the vehicle.

5. A device according to claim 4, wherein said data converting means comprises a depression angle determination means (6) for determining a plurality of different acute angles (θ₁,θ₂) to be used to produce plural sets of three dimensional map display data such that the depression angle for the map data at the position farther in the travel direction has smaller acute angle.

6. A device according to claim 5, wherein said display means displays the sets of the three dimensional map display data corresponding to the different acute angles in vertically divided sub-display areas of the second display area.

7. A device according to any one of claims 1 to 6, wherein said display means displays grids superimposed on the three dimensional display data within the second display area.

8. A map information displaying method (4, 12) for use with a vehicle navigation apparatus, comprising the steps of:
capturing points (A) of map data corresponding to a map from a view point (E) through a viewing line (EY) which starts from the view point and has a depression angle (θ) with respect to the plane (XY) of the map, said capturing step using the depression angle of 90 degrees to produce two dimensional map display data and using the depression angle of an acute angle to produce three dimensional map display data;
perspectively projecting the points of map data onto a viewing plane (S) which is prescribed perpendicularly to the viewing line and has a predetermined distance (d) from the view point to produce map display data; and
displaying the two dimensional map display data on a first display area (32) of a display plane and the three dimensional map display data on a second display area (30) of the display plane neighboring to the first display area,
**characterized in that**
said displaying step displays the two dimensional map display data and the three dimensional map display data such that the two dimensional map display data and the three dimensional map display data are continuously displayed at the border (34) of the first display area and the second display area.

9. A map information displaying method (4, 12) for use with a vehicle navigation apparatus, comprising the steps of:
capturing points (A) of map data corresponding to a map from a view point (E) through a viewing line (EY) which starts from the view point and has a depression angle (θ) with respect to the plane (XY) of the map, said capturing step using the depression angle of 90 degrees to produce two dimensional map display data and using the depression angle of an acute angle to produce three dimensional map display data;
perspectively projecting the points of map data onto a viewing plane (S) which is prescribed perpendicularly to the viewing line and has a predetermined distance (d) from the view point to produce map display data; and
displaying the two dimensional map display data on a first display area (32) of a display plane and the three dimensional map display data on a second display area (30) of the display plane neighboring to the first display area,
**characterized in that**
said capturing step converts the map data such that the scales of the two dimensional map display data and the three dimensional map display data are identical at the border (34) of the first display area and the second display area.

## Patentansprüche

1. Landkarteninformationsanzeigegerät (4, 12) zur Verwendung in einer Fahrzeugnavigationsvorrichtung, mit
einer Datenumsetzungseinrichtung (6) zum Erfassen von Punkten (A) von Kartendaten entsprechend einer Landkarte von einem Standpunkt (E) durch eine Betrachtungslinie (EY), die von dem Standpunkt ausgeht und bezüglich der Ebene (XY) der Landkarte einen Tiefenwinkel (θ) besitzt, und zum perspektivischen Projizieren der Punkte der Kartendaten auf eine Betrachtungsebene (S), welche senkrecht zu der Betrachtungslinie festgelegt ist und einen vorgegebenen Abstand (d) von dem Standpunkt besitzt, um Landkarten-Anzeigedaten zu erzeugen, wobei die Datenumsetzungseinrichtung den Tiefenwinkel von 90° verwendet, um zweidimensionale Landkarten-Anzeigedaten zu erzeugen, und den Tiefenwinkel eines spitzen Winkels verwendet, um dreidimensionale Landkarten-Anzeigedaten zu erzeugen; und
einer Anzeigeeinrichtung (12) zum Anzeigen der zweidimensionalen Landkarten-Anzeigedaten auf einem ersten Anzeigebereich (32) einer Anzeigeebene und der dreidimensionalen Landkarten-Anzeigedaten auf einem zweiten Anzeigebereich (30) der Anzeigeebene angrenzend an den ersten Anzeigebereich,
**dadurch gekennzeichnet,**
**dass** die Anzeigeeinrichtung die zweidimensionalen Landkarten-Anzeigedaten und die dreidimensionalen Landkarten-Anzeigedaten derart anzeigt, dass die zweidimensionalen Landkarten-Anzeigedaten und die dreidimensionalen Landkarten-Anzeigedaten an der Grenze (34) des ersten Anzeigebereichs und des zweiten Anzeigebereichs fortlaufend angezeigt werden.

2. Landkarteninformationsanzeigegerät (4, 12) zur Verwendung in einer Fahrzeugnavigationsvorrichtung, mit
einer Datenumsetzungseinrichtung (6) zum Erfassen von Punkten (A) von Kartendaten entsprechend einer Landkarte von einem Standpunkt (E) durch eine Betrachtungslinie (EY), die von dem Standpunkt ausgeht und bezüglich der Ebene (XY) der Landkarte einen Tiefenwinkel (θ) besitzt, und zum perspektivischen Projizieren der Punkte der Kartendaten auf eine Betrachtungsebene (S), die senkrecht zu der Betrachtungslinie festgelegt ist und einen vorgegebenen Abstand (d) von dem Standpunkt besitzt, um Landkarten-Anzeigedaten zu erzeugen, wobei die Datenumsetzungseinrichtung den Tiefenwinkel von 90° verwendet, um zweidimensionale Landkarten-Anzeigedaten zu erzeugen, und den Tiefenwinkel eines spitzen Winkels verwendet, um dreidimensionale Landkarten-Anzeigedaten zu erzeugen; und
einer Anzeigeeinrichtung (12) zum Anzeigen der zweidimensionalen Landkarten-Anzeigedaten auf einem ersten Anzeigebereich (32) einer Anzeigeebene und der dreidimensionalen Landkarten-Anzeigedaten auf einem zweiten Anzeigebereich (30) der Anzeigeebene angrenzend an den ersten Anzeigebereich,
**dadurch gekennzeichnet,**
**dass** die Datenumsetzungseinrichtung die Kartendaten derart umsetzt, dass die Maßstäbe der zweidimensionalen Landkarten-Anzeigedaten und der dreidimensionalen Landkarten-Anzeigedaten an der Grenze (34) des ersten Anzeigebereichs und des zweiten Anzeigebereichs identisch sind.

3. Gerät nach Anspruch 1 oder 2, bei welchem der erste Anzeigebereich (32) in einem unteren Teil der Anzeigeebene angeordnet ist und der zweite Anzeigebereich (30) in einem oberen Bereich der Anzeigeebene angeordnet ist.

4. Gerät nach einem der Ansprüche 1 bis 3, bei welchem die Datenumsetzungseinrichtung die zweidimensionalen Landkarten-Anzeigedaten aus den Kartendaten um eine aktuelle Position (36) eines Fahrzeugs erzeugt, in welchem das Landkarten-Informationsanzeigegerät installiert ist, und die dreidimensionalen Landkarten-Anzeigedaten aus den Kartendaten eines Bereichs in einer Fahrtrichtung des Fahrzeugs erzeugt.

5. Gerät nach Anspruch 4, bei welchem die Datenumsetzungseinrichtung eine Tiefenwinkel-Bestimmungseinrichtung (6) zum Bestimmen mehrerer unterschiedlicher spitzer Winkel (θ₁, θ₂) aufweist, die zum Erzeugen mehrerer Sätze der dreidimensionalen Landkarten-Anzeigedaten derart zu verwenden sind, dass der Tiefenwinkel für die Kartendaten an der Position weiter in der Fahrtrichtung einen kleineren spitzen Winkel besitzt.

6. Gerät nach Anspruch 5, bei welchem die Anzeigeeinrichtung die Sätze der dreidimensionalen Landkarten-Anzeigedaten entsprechend den unterschiedlichen spitzen Winkeln in vertikal unterteilten Anzeigeunterbereichen des zweiten Anzeigebereichs anzeigt.

7. Gerät nach einem der Ansprüche 1 bis 6, bei welchem die Anzeigeeinrichtung Raster anzeigt, die den dreidimensionalen Landkarten-Anzeigedaten in dem zweiten Anzeigebereich überlagert sind.

8. Landkarteninformationsanzeigeverfahren (4, 12) zur Verwendung mit einer Fahrzeugnavigationsvorrichtung, mit den Schritten:
Erfassen von Punkten (A) von Kartendaten entsprechend einer Landkarte von einem Standpunkt (E) durch eine Betrachtungslinie (EY), die von dem Standpunkt ausgeht und bezüglich der Ebene (XY) der Landkarte einen Tiefenwinkel (θ) besitzt, wobei der Erfassungsschritt den Tiefenwinkel von 90° verwendet, um zweidimensionale Landkarten-Anzeigedaten zu erzeugen, und den Tiefenwinkel eines spitzen Winkels verwendet, um dreidimensionale Landkarten-Anzeigedaten zu erzeugen;
perspektivisches Projizieren der Punkte von Kartendaten auf eine Betrachtungsebene (S), die senkrecht zu der Betrachtungslinie festgelegt ist und einen vorgegebenen Abstand (d) von dem Standpunkt besitzt, um Landkarten-Anzeigedaten zu erzeugen; und
Anzeigen der zweidimensionalen Landkarten-Anzeigedaten auf einem ersten Anzeigebereich (32) einer Anzeigeebene und der dreidimensionalen Landkarten-Anzeigedaten auf einem zweiten Anzeigebereich (30) der Anzeigeebene angrenzend an den ersten Anzeigebereich,
**dadurch gekennzeichnet,**
**dass** der Anzeigeschritt die zweidimensionalen Landkarten-Anzeigedaten und die dreidimensionalen Landkarten-Anzeigedaten derart anzeigt, dass die zweidimensionalen Landkarten-Anzeigedaten und die dreidimensionalen Landkarten-Anzeigedaten an der Grenze (34) des ersten Bereichs und des zweiten Bereichs fortlaufend angezeigt werden.

9. Landkarteninformationsanzeigeverfahren (4, 12) zur Verwendung mit einer Fahrzeugnavigationsvorrichtung, mit den Schritten:
Erfassen von Punkten (A) von Kartendaten entsprechend einer Landkarte von einem Standpunkt (E) durch eine Betrachtungslinie (EY), die von dem Standpunkt ausgeht und bezüglich der Ebene (XY) der Landkarte einen Tiefenwinkel (θ) besitzt, wobei der Erfassungsschritt den Tiefenwinkel von 90° verwendet, um zweidimensionale Landkarten-Anzeigedaten zu erzeugen, und den Tiefenwinkel eines spitzen Winkels verwendet, um dreidimensionale Landkarten-Anzeigedaten zu erzeugen;
perspektivisches Projizieren der Punkte von Kartendaten auf eine Betrachtungsebene (S), die senkrecht zu der Betrachtungslinie festgelegt ist und einen vorgegebenen Abstand (d) von dem Standpunkt besitzt, um Landkarten-Anzeigedaten zu erzeugen; und
Anzeigen der zweidimensionalen Landkarten-Anzeigedaten auf einem ersten Anzeigebereich (32) einer Anzeigeebene und der dreidimensionalen Landkarten-Anzeigedaten auf einem zweiten Anzeigebereich (30) der Anzeigeebene angrenzend an den ersten Anzeigebereich,
**dadurch gekennzeichnet,**
**dass** der Festhalteschritt die Kartendaten derart umwandelt, dass die Maßstäbe der zweidimensionalen Landkarten-Anzeigedaten und der dreidimensionalen Landkarten-Anzeigedaten an der Grenze (34) des ersten Anzeigebereichs und des zweiten Anzeigebereichs identisch sind.

## Revendications

1. Dispositif d'affichage d'informations cartographiques (4, 12) destiné à être utilisé dans un appareil de navigation pour véhicule, comprenant :
un moyen de conversion de données (6) pour capturer des points (A) de données de carte correspondant à une carte depuis un point d'observation (E) via une ligne d'observation (EY) qui commence à partir du point d'observation et à un angle de site négatif (θ) par rapport au plan (XY) de la carte et pour projeter en perspective les points des données de carte sur un plan d'observation (S) qui est prescrit perpendiculairement à la ligne d'observation et est à une distance prédéterminée (d) du point d'observation pour produire des données d'affichage de carte, ledit moyen de conversion de données utilisant l'angle de site négatif de 90 degrés pour produire des données d'affichage de carte bidimensionnelle et en utilisant l'angle de site négatif à angle aigu pour produire des données d'affichage de carte tridimensionnelles ; et
un moyen d'affichage (12) pour afficher les données d'affichage de carte bidimensionnelle sur une première zone d'affichage (32) d'un plan d'affichage et les données d'affichage de carte tridimensionnelle sur une seconde zone d'affichage (30) du plan d'affichage voisin de la première zone d'affichage,
**caractérisé en ce que**
ledit moyen d'affichage affiche les données d'affichage de carte bidimensionnelle et les données d'affichage de carte tridimensionnelle de sorte que les données d'affichage de carte bidimensionnelle et les données d'affichage de carte tridimensionnelle sont affichées de façon continue au bord (34) de la première zone d'affichage et la seconde zone d'affichage.

2. Dispositif d'affichage d'informations cartographiques (4, 12) destiné à être utilisé dans un appareil de navigation pour véhicule, comprenant :
un moyen de conversion de données (6) pour capturer des points (A) de données de carte correspondant à une carte depuis un point d'observation (E) via une ligne d'observation (EY) qui commence à partir du point d'observation et possède un angle de site négatif (θ) par rapport au plan (XY) de la carté et pour projeter en perspective les points de données de carte sur un plan d'observation (S) qui est prescrit, perpendiculaire à la ligne d'observation, et est à une distance prédéterminée (d) du point d'observation pour produire des données d'affichage de carte, ledit moyen de conversion de données utilisant l'angle de site négatif de 90 degrés pour produire des données d'affichage de carte bidimensionnelle et utilisant l'angle de site négatif d'angle aigu pour produire des données d'affichage de carte tridimensionnelle ; et
un moyen d'affichage (12) pour afficher les données d'affichage de carte bidimensionnelle sur une première zone d'affichage (32) d'un plan d'affichage et les données d'affichage de carte tridimensionnelle sur une seconde zone d'affichage (30) du plan d'affichage voisine de la première zone d'affichage, **caractérisée en ce que**
ledit moyen de conversion de données convertit les données de carte de façon que les échelles des données d'affichage de carte bidimensionnelle et les données de carte d'affichage de carte tridimensionnelle soient identiques à la frontière (34) entre la première zone d'affichage et la seconde zone d'affichage.

3. Dispositif selon la revendication 1 ou 2, dans lequel ladite première zone d'affichage (32) est située sur une partie inférieure du plan d'affichage et ladite seconde zone d'affichage (30) est située sur une zone supérieure du plan d'affichage.

4. Dispositif selon l'une quelconque des revendications 1 à 3, dans lequel ledit moyen de conversion de données produit les données d'affichage de carte bidimensionnelle à partir des données de carte autour d'une position actuelle (36) d'un véhicule sur lequel est installé le dispositif d'affichage d'informations de carte, et produit les données d'affichage de carte tridimensionnelle à partir des données de carte d'une zone dans une direction de déplacement du véhicule.

5. Dispositif selon la revendication 4, dans lequel ledit moyen de conversion de données comprend un moyen de détermination d'angle de site négatif (6) pour déterminer une pluralité d'angles aigus différents (θ₁, θ₂) à utiliser pour produire plusieurs jeux de données d'affichage de carte tridimensionnelle tels que l'angle de site négatif pour les données de carte à la position plus éloignée dans la direction de déplacement est un angle aigu plus petit.

6. Dispositif selon la revendication 5, dans lequel ledit moyen d'affichage affiche les jeux de données d'affichage de carte tridimensionnelle correspondant à différents angles aigus dans des directions de sous-affichage divisées verticalement de la seconde zone d'affichage.

7. Dispositif d'affichage selon l'une quelconque des revendications 1 à 6, dans lequel ledit moyen d'affichage affiche des grilles superposées sur les données d'affichage tridimensionnel dans la seconde zone d'affichage.

8. Procédé d'affichage d'informations cartographiques (4, 12) destiné à être utilisé avec un appareil de navigation pour véhicule, comprenant les étapes de :
capture de points (A) de données de carte correspondant à une carte à partir d'un point d'observation (E) via une ligne d'observation (EY) qui commence à partir d'un point d'observation et possède un angle de site négatif (θ) par rapport au plan (XY) de la carte, l'étape de capture utilisant un angle de site négatif de 90 degrés pour produire des données d'affichage de carte bidimensionnelle et utilisant l'angle de site négatif qui est un angle aigu pour produire des données d'affichage de carte tridimensionnelle ;
projection en perspective des points de données de carte sur un plan d'observation (S) qui est prescrit perpendiculairement à la ligne d'observation et est à une distance prédéterminée (d) du point d'observation pour produire des données d'affichage de carte ; et
affichage des données d'affichage de carte bidimensionnelle sur une première zone d'affichage (32) d'un plan d'affichage et des données d'affichage de carte tridimensionnelle sur une seconde zone d'affichage (30) du plan d'affichage voisine de la première zone d'affichage,
**caractérisé en ce que**
ladite étape d'affichage affiche les données d'affichage de carte bidimensionnelle et les données d'affichage de carte tridimensionnelle de façon que les données d'affichage de carte tridimensionnelle soient affichées de façon continue à la frontière (34) de la première zone d'affichage et de la seconde d'affichage.

9. Procédé d'affichage d'informations cartographiques (4,12) pour utilisation avec un appareil de navigation pour véhicule, comprenant les étapes de :
capture de points (A) de données de carte correspondant à une carte à partir d'un point d'observation (E) via une ligne d'observation (EY) qui commence à partir du point d'observation et fait un angle de site négatif (θ) par rapport au plan (XY) de la carte, ladite étape de capture utilisant l'angle de site négatif de 90 degrés pour produire des données d'affichage de carte bidimensionnelle et utilisant l'angle de site négatif à angle aigu pour produire des données d'affichage de carte tridimensionnelle ;
projection en perspective des points de données de carte sur un plan d'observation (S) qui est prescrit perpendiculairement à la ligne d'observation et est à une distance prédéterminée (d) du point d'observation pour produire des données d'affichage de carte ; et
affichage des données d'affichage de carte bidimensionnelle sur une première zone d'affichage (32) d'un plan d'affichage et des données d'affichage de carte tridimensionnelle sur une seconde zone d'affichage (30) du plan d'affichage au voisinage de la première zone d'affichage,
**caractérisé en ce que**
ladite étape de capture convertit les données de carte de telle façon que les échelles des données d'affichage de carte bidimensionnelle et les données d'affichage de carte tridimensionnelle sont identiques à la frontière (34) de la première zone d'affichage et de la seconde zone d'affichage.
